# EUROPÄISCHE PATENTSCHRIFT

(11) **EP 1 812 134 B1**
(45) Veröffentlichungstag und Bekanntmachung des Hinweises auf die Patenterteilung: **07.10.2009**
(21) Anmeldenummer: 05770869.5
(22) Anmeldetag: 05.08.2005
(51) Int. Cl.: B01D 29/21

(54) **HOHLZYLINDRISCHES FILTERELEMENT FÜR FLÜSSIGE ODER GASFÖRMIGE MEDIEN**
HOLLOW CYLINDRICAL FILTER ELEMENT FOR LIQUID OR GASEOUS MEDIA
ELEMENT FILTRANT CYLINDRIQUE CREUX POUR FLUIDES LIQUIDES OU GAZEUX

(30) Priorität: 19.11.2004 DE 102004055845
(43) Veröffentlichungstag der Anmeldung: 01.08.2007
(73) Patentinhaber: Zander Aufbereitungstechnik GmbH & Co.KG, 45219 Essen (DE)
(72) Erfinder: ZACHOS, Alexandros, 45136 Essen (DE)
(74) Vertreter: Cohausz & Florack
(86) Internationale Anmeldenummer: PCT/EP2005/008536
(87) Internationale Veröffentlichungsnummer: WO 2006/056244

(56) Entgegenhaltungen:
- EP-A- 0 440 352
- EP-B- 1 409 106
- DE-A1- 10 235 275
- US-A- 4 184 966
- US-A- 5 114 508

## Beschreibung

Die Erfindung betrifft ein Filterelement für flüssige oder gasförmige Medien in Form eines Hohlzylinders, dessen Zylinderwand aus einem mehrlagigen Flachmaterialzuschnitt aus mindestens einer inneren Lage aus einem Filterstoff sowie einer außenseitigen und einer innenseitigen Lage aus schweißbarem, thermoplastischem Kunststoff gebildet ist, wobei die innen- und außenseitige Lage als Stützgitter für den Filterstoff ausgebildet und die einander überlappenden Längsränder des zum Hohlzylinder umgeformten Flachmaterialszuschnittes über eine Längsnaht verbunden sind.

Filterelemente dieser Art sind in unterschiedlichen Ausführungen aus der Praxis bekannt. Bestückt mit Endkappen werden sie in topfförmige Filtergehäuse eingesetzt. Zur Vergrößerung der wirksamen Filterfläche kann ihre Zylinderwand plissiert sein. Bei einer Ausführung sind die einander überlappenden Längsränder des zum Hohlzylinder geformten Flachmaterialzuschnittes mittels eines Klebers verbunden. Diese Art der Herstellung eines hohlzylindrischen Filterelementes ist aufwendig. Dagegen ist die Herstellung durch Schweißen der Längsnaht weniger aufwendig. Diese Herstellungsart ist aber beschränkt auf Flachmaterialzuschnitte, bei denen die innere Lage aus nicht schweißbarem Filterstoff verhältnismäßig dünn ist, denn nur bei einer dünnen Lage reicht das schweißbare Material der innen- und außenseitigen Lage aus, um durch die innere Lage hindurch schweißen zu können. Bei dickeren Lagen ist man deshalb bis heute auf das Kleben angewiesen. Alternative Vorschläge, mittels auf die einander überlappenden Längsränder der plissierten Zylinderwand aufgesteckter und verschweißter Klipse aus thermoplastischem Material zu einer dichten Längsnaht zu kommen, haben nicht zum Erfolg geführt. Das Aufstecken der Klipse erfordert verhältnismäßig hohe Plissierfalten im Bereich der Längsränder. Nachteilig ist aber vor allem, dass von den einander überlappenden Längsrändern nur die äußeren Lagen an die Klipse angeschweißt werden. Eine für eine dichte Längsnaht durchgehende Verbindung über alle Lagen wird nicht erreicht.

Die vorbeschriebenen Filterelemente sind zum Teil auch aus der Patentliteratur bekannt. Bei einem bekannten Filterelement (DE 102 50 969 A1, 102 35 275 A1) ist die Zylinderwand mehrlagig aufgebaut und plissiert. Bei der äußeren Lage kann es sich um eine Gitter- oder Gewebestruktur auf Polyamid- oder Polyesterbasis handeln, die als Abstützung des hohlzylindrischen Filterelementes dient. Die Enden des aus einem Zuschnitt hergestellten Filterelementes sind durch Verschweißen miteinander verbunden. Bezüglich der beschriebenen Problematik, an der Schweißnaht eine dichte Verbindung zu erzielen, ist im Stand der Technik nichts zu entnehmen.

Der Erfindung liegt die Aufgabe zugrunde, ein Filterelement aus einem mehrlagigen Flachmaterialzuschnitt zu schaffen, das sich ohne großen Aufwand herstellen lässt und auch bei vergleichsweise dicken inneren Lagen aus nicht schweißbarem Filterstoff eine dichte Längsnaht aufweist.

Diese Aufgabe wird erfindungsgemäß bei einem Filterelement der eingangs genannten Art dadurch gelöst, dass die einander überlappenden Längsränder des Flachmaterialzuschnittes über sich durch den gesamten Querschnitt des Materialzuschnittes erstreckende Brücken aus schweißbarem, thermoplastischem Kunststoff verbunden sind, wobei diese Brücken gemeinsam mit den schweißbaren Lagen des Flachmaterialzuschnittes verschweißt sind.

Das erfindungsgemäße Filterelement lässt sich mit einer dichten Längsnaht ohne großen Aufwand herstellen. Die dafür eingesetzten Brücken aus schweißbarem, thermoplastischen Kunststoff haben zwei Funktionen. Zum einen fixieren sie mechanisch den zum Hohlzylinder geformten Flachmaterialzuschnitt für den Schweißvorgang, indem sie sich durch alle Lagen des Flachmaterialzuschnittes erstrecken. Zum anderen stellen sie beim Schweißen eine thermische Brücke zwischen den Lagen aus schweißbarem Material her. Dadurch ergibt sich eine gute Verbindung, die ein Ablösen einzelner Lagen im Bereich der Schweißnaht unmöglich macht. Der Abstand der Brücken voneinander lässt sich einstellen. Bei dickerem nicht schweißbarem Filterstoff ist es von Vorteil, die Brücken enger anzuordnen als bei einer weniger dicken Lage aus Filterstoff. Damit die Brücken mit den schweißbare Lagen eine optimale Verbindung beim Schweißen eingehen, sollte für die Brücken und für die Lagen dasselbe thermoplastische Material verwendet werden.

Eine bevorzugte Art für das Setzen der Brücken besteht darin, dass die Brücken Teile des Fadens einer Nähnaht sind. Über die Stichweite lässt sich dann auch leicht die Dichte der Besetzung der Brücken bestimmen.

Für das Setzen der Brücken, insbesondere für die Herstellung einer Nähnaht ist es günstig, wenn bei einem plissierten Flachmaterialzuschnitt die einander überlappenden, vernähten Längsränder von außen liegenden Plissierabschnitten gebildet sind. Dann kann nämlich von außen genäht werden.

Im Folgenden wird die Erfindung anhand einer ein Ausführungsbeispiel schematisch darstellenden Zeichnung näher erläutert. Im Einzelnen zeigen:

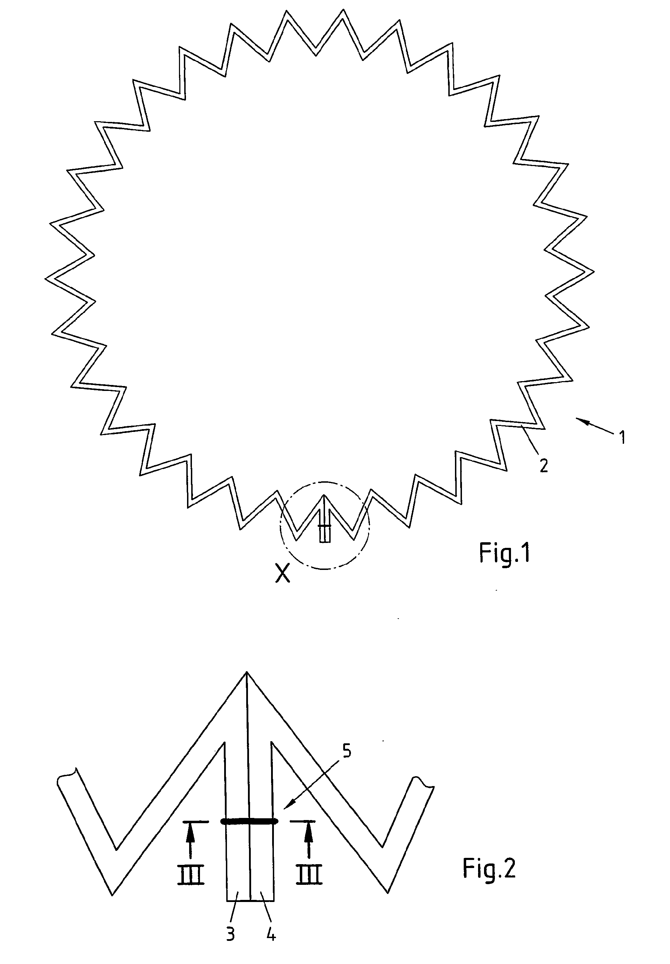

- Fig. 1: ein Filterelement in Form eines Hohlzylinders im Querschnitt,
- Fig. 2: das Filterelement gemäß Figur 1 im vergrößerten Ausschnitt A im Bereich einer Längsnaht und
- Fig. 3: die Längsnaht des Filterelementes gemäß Figur 1 und 2 im Querschnitt nach Linie I-I der Figur 2.

Das Filterelement ist aus einem rechteckförmigen Zuschnitt 1 aus mehrlagigem Flachmaterial gebildet, das plissiert ist. Der Flachmaterialzuschnitt 1 ist zu einem Hohlzylinder 2 geformt. Zwei Längsränder 3, 4 werden von außen liegenden Abschnitten des plissierten Flachmaterialzuschnittes 1 gebildet. Diese Längsränder 3, 4 überlappen einander und sind miteinander über eine Längsnaht 5 dicht verbunden.

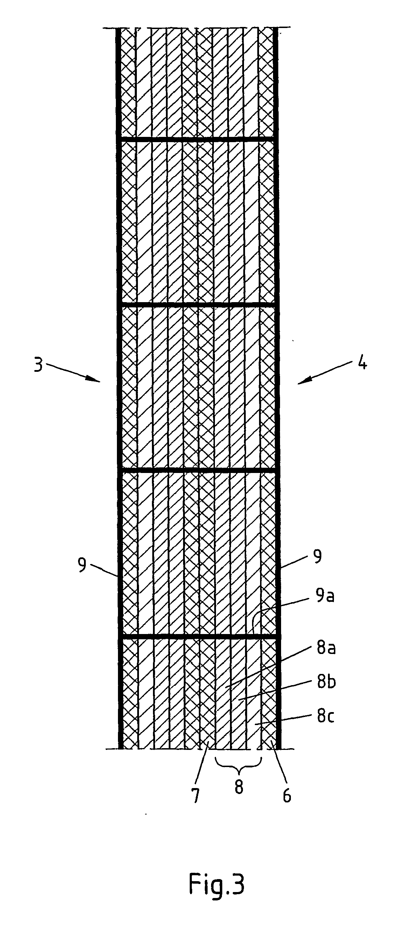

Der mehrlagige Flachmaterialzuschnitt 1 besteht, wie am besten aus Figur 3 hervorgeht, aus einer innenseitigen Lage 6, einer außenseitigen Lage 7 jeweils aus schweißbarem, thermoplastischem Kunststoff, z.B. Polypropylen, und einer inneren Lage 8 im Wesentlichen aus nicht schweißbarem Filterstoff 8. Der Filterstoff 8 besteht aus zwei Lagen nicht schweißbarem Filterpapier 8a, 8b und einer perforierten Drainagelage 8c, die aus einem nur bedingt schweißbaren Material, z.B. Polyäthylen, besteht. Da die innere Lage 8 nicht formstabil ist, sind die äußeren Lagen 7, 8 erforderlich. Sie sind als Stützgitter ausgebildet, also unbeschränkt durchlässig für das zu filternde Medium, und formstabil.

Die einander überlappenden Längsränder 3, 4 sind zunächst mechanisch über eine Naht 9 verbunden. Als Nähgarn für diese Naht 9 findet schweißbarer, thermoplastischer Kunststoff Verwendung, der ähnliche Schweißeigenschaften wie der schweißbare, thermoplastische Kunststoff der innen- und außenseitigen Lagen 6, 7 hat. Von diesem Nähgarn bilden die Abschnitte im Durchstechbereich Brücken 9a, die sich durch den gesamten Querschnitt der beiden einander überlappenden Längsränder 3, 4 erstrecken. Nach Erstellen der Längsnaht 5 als Nähnaht sind die Längsränder 3, 4 mechanisch für das nachfolgende Schweißen, insbesondere Ultraschallschweißen fixiert. Beim Ultraschallschweißen verbinden sich die thermoplastischen Materialen der innen- und außenseitigen Lagen 6, 7 und des Nähgarns, so dass eine auf Dauer dichte Längsnaht erhalten wird.

## Patentansprüche

1. Filterelement für flüssige oder gasförmige Medien in Form eines Hohlzylinders , dessen Zylinderwand aus einem mehrlagigen Flachmaterialzuschnitt(1) aus mindestens einer inneren Lage aus einem Filterstoff (8) sowie einer außenseitigen (6) und einer innenseitigen Lage (7) aus schweißbarem, thermoplastischen Kunststoff gebildet ist, wobei die innen- und die außenseitige Lage (6, 7) als Stützgitter für den Filterstoff (8) ausgebildet und die einander überlappenden Längsränder (3, 4) des zum Hohlzylinder geformten Flachmaterialzuschnittes (1) über eine Längsnaht (5) verbunden sind,
**dadurch gekennzeichnet, dass** die einander überlappenden Längsränder (3, 4) des Flachmaterialzuschnittes (1) über sich durch den gesamten Querschnitt des Flachmaterialzuschnittes (1) erstreckende Brücken (9a) aus schweißbarem thermoplastischem Kunststoff verbunden sind, wobei diese Brücken (9a) gemeinsam mit den schweißbaren Lagen (6, 7) des Materialzuschnittes verschweißt sind.

2. Filterelement nach Anspruch 1,
**dadurch gekennzeichnet, dass** die Brücken (9a) Teile des Fadens einer Nähnaht (9) sind.

3. Filterelement nach Anspruch 1,
**dadurch gekennzeichnet, dass** der Flachmaterialzuschnitt (1) plissiert ist, wobei die einander überlappenden, vernähten Längsränder (3, 4) von außen liegenden Plissierabschnitten gebildet sind.

4. Filterelement nach einem der Ansprüche 1 bis 3,
**dadurch gekennzeichnet, dass**
die als Stützgitter für den Filterstoff (8) ausgebildeten innen- und außenseitigen Lagen (6, 7) und die Brücken (9a) aus demselben thermoplastischen Kunststoff bestehen.

## Claims

1. Filter element for liquid or gaseous media in the form of a hollow cylinder, the cylinder wall of which is formed from a multilayer flat material cut section (1) consisting of at least one inner layer of a filter material (8) and an outside (6) and an inside (7) layer made of weldable thermoplastic plastic material, wherein the inside and outside layers (6, 7) are formed as support lattices for the filter material (8) and the overlapping longitudinal edges (3, 4) of the flat material cut section (1) shaped to the hollow cylinder are connected by a longitudinal seam (5),
**characterised in that**
the overlapping longitudinal edges (3, 4) of the flat material cut section (1) are connected by bridges (9a) extending over the entire cross-section of the flat material cut section (1), made of weldable thermoplastic plastic material, wherein these bridges (9a) are welded together with the weldable layers (6,7) of the material cut section.

2. Filter element according to Claim 1
**characterised in that**
the bridges (9a) are parts of the thread of a sewn seam (9) .

3. Filter element according to Claim 1
**characterised in that**
the flat material cut section (1) is pleated, wherein the overlapping sewn longitudinal edges (3, 4) are formed from outside pleated sections.

4. Filter element according to any one of Claims 1 to 3
**characterised in that**
the inside and outside layers (6, 7) formed as support lattices for the filter material (8) and the bridges (9a) consist of the same thermoplastic plastic material.

## Revendications

1. Elément filtrant en forme de cylindre creux, pour fluides liquides ou gazeux, dont la paroi cylindrique, formée par une pièce découpée en matériau plat (1) à plusieurs couches, consiste, au moins, en une couche interne en matière filtrante (8), ainsi qu'en une couche côté extérieur (6) et en une couche côté intérieur (7) en matière synthétique thermoplastique, soudable, la couche côté extérieur et la couche côté intérieur (6, 7) étant conçues en tant que grille support pour la matière filtrante (8) et les bords longitudinaux superposés (3, 4) de la pièce découpée en matériau plat (1), façonnée en cylindre creux, étant reliés par une couture longitudinale (5), **caractérisé en ce que** les bords longitudinaux superposés (3, 4) de la pièce découpée en matériau plat (1) sont reliés par des ponts (9a) en matière synthétique thermoplastique soudable, qui s'étendent sur la totalité de la section transversale de la pièce découpée en matériau plat (1), ces ponts (9a) étant soudés en commun avec les couches soudables (6, 7) de la pièce découpée en matériau plat.

2. Elément filtrant selon la revendication 1, **caractérisé en ce que** les ponts (9a) font partie du fil d'une couture (9).

3. Elément filtrant selon la revendication 1, **caractérisé en ce que** la pièce découpée en matériau plat (1) est plissée, les bords longitudinaux superposés (3, 4), cousus, étant formés par des sections plissées, situées à l'extérieur.

4. Elément filtrant selon l'une des revendications 1 à 3, **caractérisé en ce que** les couches côté intérieur et côté extérieur (6, 7), conçues en tant que grille support pour la couche interne en matière filtrante (8), et les ponts (9a) consistent en la même matière synthétique thermoplastique.
